(19) **Europäisches Patentamt / European Patent Office / Office européen des brevets**

(11) **EP 2 988 186 B1**

(12) **EUROPEAN PATENT SPECIFICATION**

(45) Date of publication and mention
of the grant of the patent:
**14.03.2018 Bulletin 2018/11**

(51) Int Cl.:
***G05B 23/02*** *(2006.01)*

(21) Application number: **14181985.4**

(22) Date of filing: **22.08.2014**

(54) **Detection of consistent steady-state behavior in process plants**

Nachweis von konsistentem stationärem Verhalten in verfahrenstechnischen Anlagen

Détection d'un comportement en régime permanent cohérent dans des installations de traitement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2016 Bulletin 2016/08**

(73) Proprietor: **Siemens Aktiengesellschaft**
**80333 München (DE)**

(72) Inventors:
• **Jahanshahi, Esmaeil**
**7027 Trondheim (NO)**
• **Sivalingam, Selvanathan**
**7044 Trondheim (NO)**
• **Schofield, John Bradford**
**1209 Geneva (CH)**

(74) Representative: **Maier, Daniel Oliver**
**Siemens AG**
**Postfach 22 16 34**
**80506 München (DE)**

(56) References cited:
• **SHROWTI N A ET AL: "Type-II critical values for a steady-state identifier", JOURNAL OF PROCESS CONTROL, OXFORD, GB, vol. 20, no. 7, 1 August 2010 (2010-08-01) , pages 885-890, XP027129855, ISSN: 0959-1524 [retrieved on 2010-06-20]**
• **RHINEHART R RUSSELL: "Automated steady and transient state identification in noisy processes", 2013 AMERICAN CONTROL CONFERENCE, IEEE, 17 June 2013 (2013-06-17), pages 4477-4493, XP032476353, ISSN: 0743-1619 ISBN: 978-1-4799-0177-7 [retrieved on 2013-08-14]**

**Description**

Field of invention

The present invention relates to the field of detecting a steady state behavior or conditions in process plants.

Art Background

As of now, visual inspection of process values in trend plots may be a way of identifying the presence of steady state conditions. When performing a visual inspection of process values in trend plots, a user may manually analyze trend plots displayed to the user on a computer screen. Further, steady state detection may be done in a control loop by comparing process output of process values with pre-determined set-point information based on a so-called student t-test. The set-point information may be pre-determined based on the experience of a user initializing the control loop. Accordingly, there may be a need for a more efficient detection of steady states in a process plant. Shrowti et al "Type II critical values for a steady state identifier" Journal of Process Control , 01/08/2010, Volume 20, pages 885-890 describes an identification method of steady and transient states in process signals.

Summary of the Invention

This need may be met by the subject matter according to the independent claims. Advantageous embodiments of the present invention are described by the dependent claims.

According to a first aspect of the invention, there is provided a method for detecting a steady-state in a process plant. The method comprises receiving a process value of the process plant. For example, the process value may be received by a software module simulating the process value or one or more devices, e.g. one or more sensors, which provide measurement data of the process value. Based on the received data of the process value, the method comprises determining a recursive mean of the process value. Determining a recursive mean may relate to determining a mean or an average recursively i.e. based on the previous determined mean/average and the received process value.

Further, the method comprises calculating an arithmetic mean of the process value within a pre-determined window. For example, the pre-determined window may comprise a pre-defined number of previously received process values. The calculation of the arithmetic mean may be performed in a non-recursive manner. For example, the arithmetic mean of the process value within the pre-determined window may be estimated. Based on the calculated arithmetic mean, the method comprises determining the standard deviation of the process value within the pre-determined window. Next, the method comprises determining an upper limit and a lower limit of the process value based on the recursive mean of the process value and the determined standard deviation. Then, the method further comprises determining whether the calculated arithmetic mean is between the determined upper limit and the determined lower limit. If the calculated arithmetic mean is between the determined upper limit and the determined lower limit, the method comprises generating a first index wherein the first index indicates that the calculated arithmetic mean is between the determined upper limit and the determined lower limit.

By generating the first index when the calculated arithmetic mean is between the determined upper limit and the determined lower limit, the values of the process value within the pre-determined window may be within the expected value range of the process value. In other words, if the first index indicates that the calculated arithmetic mean is between the determined upper limit and the determined lower limit, no large deviation of the values of the process value within the pre-determined window from the previous values of the process value may be detected. Thus, the first index may indicate a steady state in the process plant. Further, determining a recursive mean of the process value has the technical advantage that only the previous mean of the process value and the current value of the process value may be required for determining the mean of the process value. This may reduce storage space for determining the mean of the process values, in particular, when the data set of the process value is large.

According to an embodiment of the invention, the step of determining the standard deviation of the process value within the pre-determined window and based on the calculated arithmetic mean may further comprise: determining the quadratic deviation of the process value from the calculated arithmetic mean within the pre-determined window, calculating the variance of the process value as the recursive mean of the determined quadratic deviation of the process value, and determining the standard deviation of the process value as the square root of the calculated variance of the process value. This may provide the advantage that the standard deviation takes into account previously determined standard deviations. In other words, the effect or influence of the variance of the process values within the pre-determined window may be reduced.

According to a further embodiment of the invention, the method comprises generating a second index if the calculated arithmetic mean is not between the determined upper limit and the determined lower limit. In particular, the generated second index may indicate that the process value is not in a steady state. In other words, the method for detecting a steady state in a process plant may terminate by generating a second index. For example, if the mean of the process value within the pre-determined windows significantly deviates from the recursive mean of the process value, this deviation may indicate a significant change, e.g. increase or decrease, of the values of the process value. Thus, the method of detecting a steady state may terminate at an early stage of the steady state detection method by generating the second index.

According to a further embodiment of the invention, the size of the pre-determined window may be 64 process values. This means that 64 process values, e.g. the latest 64 process values, are used for determining the mean and the standard deviation. This may provide the advantage that only 64 process values have to be stored and processed for determining the mean and the standard deviation. This significantly reduces the storage requirements and the computational complexity when calculating the mean and the standard deviation of the process values within the pre-determined window.

According to a further embodiment of the invention, the upper limit equals the determined recursive mean plus 0.5 of the determined standard deviation, and the lower limit of the process value equals the determined recursive mean minus 0.5 of the determined standard deviation. In other words, the standard deviation within the predetermined window may determine the size of the interval around the recursive mean of the process value. Thus, short term deviations of the values of the process value within the predetermined window may be taken into account for detecting a steady state of the process value. As a consequence, the reliability of the described method may be increased.

According to a further embodiment of the invention, the method further comprises, if the calculated arithmetic mean is between the determined upper limit and the determined lower limit, determining whether the generated first index changes within the pre-determined window. This may provide the advantage that any significant changes of the process value may be detected efficiently.

According to a further embodiment of the invention, the step of determining whether the generated first index changes within the pre-determined window may further comprise calculating a temporary index, the temporary index indicating the absolute value of the derivative of the first index. Calculating the temporary index may simplify the detection of the steady state, since the temporary index can be processed efficiently in further processing steps.

According to a further embodiment of the invention, the method may further comprise, if the calculated arithmetic mean is between the determined upper limit and the determined lower limit, calculating a third index based on the temporary index, the third index indicating whether the generated first index changes within the predetermined window. This may provide the advantage that any change of the first index is indicated in a simplified manner.

According to a further embodiment of the invention, the third index may equal to the integral of the temporary index within the pre-determined window. This may provide the advantage that the third index is calculated efficiently.

According to a further embodiment of the invention, the method may further comprise, if the first index indicates that the calculated arithmetic mean is between the determined upper limit and the determined lower limit and the third index indicates that the first index does not change within the pre-determined window, generating a second index, the second index indicating that the process value is in a steady state. By using the first and the third index, a steady state may be efficiently detected.

According to a further embodiment of the invention, the method may further comprise, if the first index indicates that the calculated arithmetic mean is not between the determined upper limit and the determined lower limit or the third index indicates that the first index changes within the pre-determined window, generating a second index, the second index indicating that the process value is not in a steady state. By using the second index, it may be efficiently detected whether the process value is not in a steady state.

According to a further embodiment of the invention, the method may further comprise detecting the steady state in an open-loop system where a set point information is not applicable. This may provide the advantage that a more flexible detection of steady states is enabled.

According to a further aspect of the invention there is provided a controller device for detecting a steady-state in a process plant. The controller device comprises a processor, a memory, instructions stored within the memory. The instructions, when executed on the processor, cause the controller to receive a process value of the process plant, determine a recursive mean of the process value, calculate an arithmetic mean of the process value within a pre-determined window, determine a standard deviation of the process value within the pre-determined window and based on the calculated arithmetic mean, determine an upper limit and a lower limit of the process value based on the determined recursive mean of the process value and the determined standard deviation, determine whether the calculated arithmetic mean is between the determined upper limit and the determined lower limit, if the calculated arithmetic mean is between the determined upper limit and the determined lower limit, generate a first index indicating that the calculated arithmetic mean is between the determined upper limit and the determined lower limit. This may provide the advantage that a steady state may be efficiently indicated having low storage requirements for storing the process values and providing simple and efficient algorithm with low computational requirements.

According to a further aspect of the invention there is provided computer program for detecting a steady state in a process plant, the computer program, when being executed by a data processor, is adapted for controlling and/or for carrying out the method as described above.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a flowchart of a method for detecting a consistent steady state of a process value.
Figure 2 shows a system for simulating a steady state detection method.
Figure 3 shows a time trend resulting from a simulation of a steady state detection method.

Detailed Description

The illustration in the drawing is schematically. It is noted that in different figures, similar or identical elements are provided with the same reference signs or with reference signs, which are different from the corresponding reference signs only within the first digit.

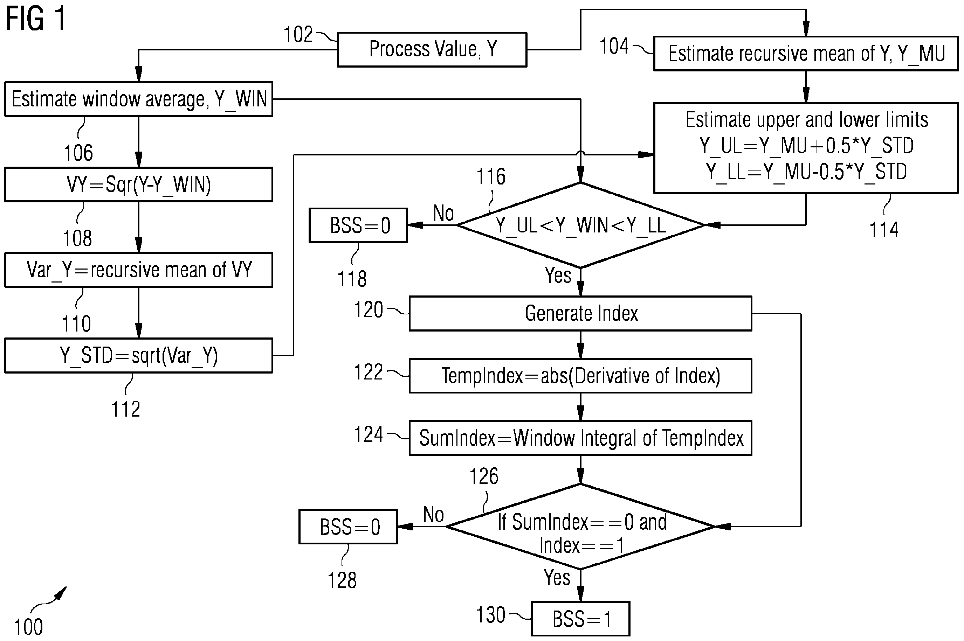

Figure 1 shows a flowchart 100 of a method for detecting a consistent steady state in a process plant. A process value Y may be received 102 from one or more sensors or one or more software modules. The process value may be an integer value, a real value, or any other numerical value. The process value may represent operational data of a manufacturing process, a chemical process and/or any other industrial process. The process value may be used to determine 104 a mean of the process value. The mean of the process values 102 may be determined as a recursive mean $Y_\mu$. Determining the mean of the process value as a recursive mean may have the advantage that there is no need to store all previously received process values. When determining or estimating the recursive mean of the process value, only the current process value and the previous mean of the process value may be required. Alternatively, a low pass filter, e.g. a moving average, may be used to determine or to estimate the mean/average of the process value.

Next, the method may determine or estimate a window average of the process value $Y_{WIN}$. Determining a window average or window mean may comprise calculating an arithmetic mean of the process value in a pre-determined window. The pre-determined window may comprise a window with a window size of 32, 64, 96, 128. Preferably, a window size of 64 may be used. When using a pre-determined window size of 64, 64 process values may be used to determine the window mean of the process value.

In step 108, the variance $VY$ of the process value $Y$ from the window average $Y_{WIN}$ is calculated as follows:

$$VY = (Y - Y_{WIN})^2$$

In particular, the variance of the process value is calculated as the deviation of the process value Y from the window average $Y_{WIN}$.

In step 110, the recursive mean $Var_Y$ of the variance of the process value $VY$ is determined or estimated. In other words, previous deviations of the process value from the determined window average may be taken into account to diminish any short-term deviations of the process value.

In step 112, the standard deviation $Y_{STD}$ may be calculated based on the recursive mean of the variance of the process value. In particular, the standard deviation may be calculated from the square root of the variance of the process value. The variance itself may be calculated based on a recursive mean.

In step 114, the upper limit $Y_{ul}$ and the lower limit $Y_{ll}$ of the process value may be calculated or estimated as follows:

$$Y_{ul} = Y_{\mu} + 0.5 * Y_{STD}$$

$$Y_{ll} = Y_{\mu} - 0.5 * Y_{STD}$$

where $Y_{\mu}$ may be the recursive mean of the process value as determined in step 104 and $Y_{STD}$ may be the standard deviation of the recursive mean of the variance of the process value as calculated in steps 106 to 112.

By using the standard deviation of the variance of a process value to determine the upper and lower limits of the process value, the upper and lower limits of the process value may slowly adapt to changes of the process value so that the interval may remain substantially stable around the recursive mean of the process value.

Further, if the process values increase or decrease over time, the recursive mean of the process value may slowly adapt to the increase or the decrease of the process value. Thereby, the upper and lower limits may move relative to the recursive mean of the process value. By determining the upper and lower limits relative to the recursive mean of the process value, an interval for detecting a steady state of the process value may be determined in a simple way.

In step 116, the window average $Y_{WIN}$ may be compared with the upper limit $Y_{ul}$ und the lower limit $Y_{ll}$ to determine whether the window average of the process value is between the upper and lower limits. If the window average is between the upper limit and the lower limit, a first index, index bound INBND, may be provided indicating that the window average is between the upper and lower limits. For example, the first index may be set to 1. If the window average of the process value is not between the upper and lower limits, a second index, binary steady state BSS, may be provided, indicating that the windowed mean is not between the upper and lower limit. For example, the second index may be set to 0. If the second index indicates that the window average is not between the upper limit and the lower limit, no steady state for the process value may be detected in the process plant. Further, the method for detection a consistent steady state may terminate until the next process value may be received, i.e. the method may continue at step 102.

The following steps 120 to 130 of the method may be performed only if the window average of the process value is between the upper limit and the lower limit of the process value. In step 122, the absolute value of a derivate of the first index may be calculated to determine a temporary index. The temporary index may indicate whether there is a change of the first index. For example, a delta function may be used to calculate the temporary index:

$$tempindex = abs(\frac{\Delta index}{\Delta t}) \, .$$

If the absolute value of the difference of two indices equals 0, the two indices may have the same value. Thus, no change between the two indices may be detected and the temporary index, i.e. *tempindex,* may be 0. If the absolute value of the difference of two indices does not equal 0, the two indices may have different values. Accordingly, a change between the indices is detected and the temporary index does not equal 0.

Next, in step 124, a windowed integral of the temporary index may be calculated to determine a third index. The third index may indicate whether there is a change of the first index in a pre-determined window of the integral by using the temporary index. In particular, the length of the pre-determined window of the integral may depend on how long the first index may be needed to be constant. For example, if a sampling time of the process value is 0.1 seconds and the first index is needed to be constant for 12.8 seconds, the length or size of the particular window should be 128 values of the first index. For example, if the temporary index equals 0, i.e. there is no change of the first index, and the third index, i.e. the sum of the temporary indices, is also 0, the third index may indicate that there is no change of the first index within the pre-determined interval.

In step 126, the second index, BSS, may be generated indicating whether the process value is in a consistent steady state. In particular, if the third index indicates that there is no change of the first index within the pre-determined window and the first index indicates that the window average of the process value is between the upper and the lower limits, a second index may be generated indicating that a consistent steady state of the process value is detected in the process plant. For example, the second index may equal to 1. If no consistent steady state may be detected, i.e. the third index indicates a change of the first index and/or the first index indicates that the windowed mean of the process value is not within the upper and lower limits, a second index may be generated indicating that no consistent steady state may be detected. After generating a second index, the method may terminate or wait for the next process value to be received. For example, the method may continue at step 102.

Advantageously, the method for detecting a steady state in a process plant may be used to detect consistent steady states in closed loop or open loop controller devices in process plants since no set point is used for determining steady states. Instead of using set-point information, the recursive mean of the process value may be used for detecting a steady state. Further, the method may even detect steady states in the presence of offset information. The offset information may be defined as a difference between a set point and the process value. For example, when the process value never reaches the set point, steady states may still be detected by the method.

The method may use two criteria, the first index and the third index, for detecting a consistent steady state:

> a) The first criterion may be the first index. The first index may be generated when the window average of the process value is between the upper and lower limits of the process value, wherein the upper and lower limits may be used to determine or estimate the recursive mean of the process value.
> b) The second criterion may be the third index. The third index may be the windowed integral of absolute value of a derivate of the first index. When the third index may equals 0, this may imply that the first index does not change in the pre-determined window of the integral.

By using the first criteria and/or the second criteria, the method may provide a simple way to detect consistent steady states in process plants. In particular, consistent steady state behavior may refer to the process value or process output remaining constant for a considerable time duration (e.g. 30 seconds for chemical process plants).

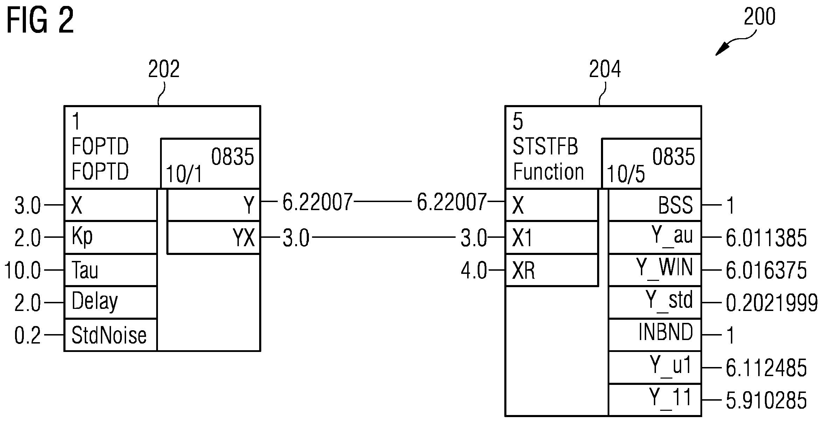

**Figure 2** shows an exemplary implementation of the steady state algorithm as a function block, the function block labeled "STSTFB", in a process control system (PCS), e.g. Siemens PCS7. In particular, Figure 2 shows a screen shot of a chart used for testing proposes. The notation used in the screen shot is as per NORSOK standard. This means that X (or variables starting with X) refers to function inputs and Y (or variables starting with Y) refers to function outputs. Instead of receiving the process value from e.g. one or more sensors of the process plant, another function block, the function block labeled "FOPTD", may be used for generating process values. In particular, the function block FOPTD may simulate a first order plus time delay (FOPTD) process for generating a process value Y.

The simulation may be performed by considering the following FOPTD process:

$$G(s) = \frac{2e^{-2s}}{10s+1} \ .$$

In addition, a measurement noise may be added to the process output so that the process output may comprise a standard deviation of the 0.2.

The function block STSTFB may take the generated process value Y as input X. Further, the function block STSTFB may take the output YX of function block STSTFB as input X1, wherein X1 refers to a process input, i.e. the generated process value Y. In addition, the function block may take XR as input. XR may be optionally. XR may refer to a set point which may be used to detect offset information in the (simulated) process. When starting the simulation, the process value Y may be used to initialize the recursive mean.

The output of the function block STSTFB may comprise the second index BSS which shows the presence of a consistent steady state in the process. In particular, the second index may show the presence of a consistent steady state when $Y_{WIN}$ lies between $Y_{ul}$ and $Y_{ll}$ and the value of the first index INBND does not change for a predefined window of samples, the process may be considered to be at steady state conditions, e.g. the value of the second index BSS is 1. More specifically, the size of the predefined window may dependent on a sample time and a time for which the first index is required to be constant. For example, if the sampling time of the process value is 0.1 seconds and the first index is needed to be constant for 12.8 seconds, the length or size of the particular window may be 128. The size of the predefined window may be fixed or may be dynamically adapted to changes of the sampling time and/or changes of the time for which the first index is required to be constant. In addition, the function block STSTFB may provide intermediate results of the method, e.g. $Y_{\mu}$, $Y_{WIN}$, $Y_{STD}$, $Y_{ul}$, $Y_{ll}$, and INBND as depicted in Figure 2.

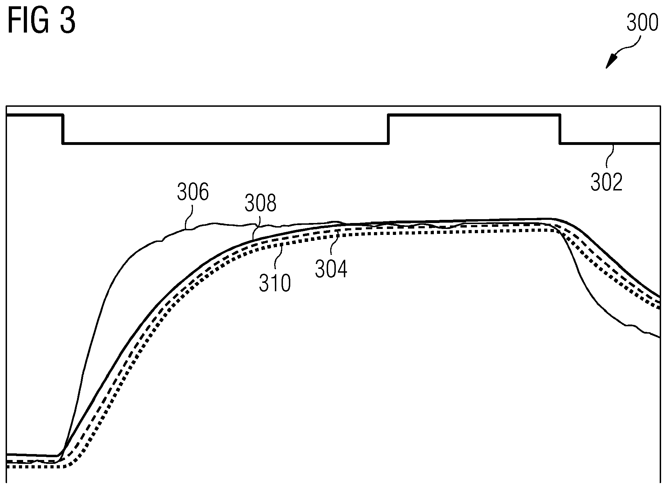

**Figure 3** shows time trends 300 which may result from a simulation as described with respect to Figure 2. In particular, Figure 3 presents the time trend of the second index 302. At the beginning the simulation, the second index is 1. Accordingly, the second index indicates that the process value is in a consistent steady state. Then, the second index changes from 1 to 0 which indicates that no consistent steady state can be detected any more. As can be seen by the time trend 302, the window average of the process values increases significantly. When the window average of the process value arrives at a stable state between the upper and lower limits of the process values, the second index may indicate again that a consistent steady state is detected. This steady state may be at a different level as the previous steady state. In other words, the method for steady state detection may detect steady states at different levels of the process value depending on the determined upper and lower limits of the process value.

As further depicted in Figure 3, the time trend 304 presents the time trend of the recursive mean of the process value, the time trend 306 presents the time trend of the windowed, non-recursive mean of the process value, and the time trends 308 and 310 present the time trends of the upper limit and the lower limit, respectively.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

**Claims**

1. Method for detecting a steady-state in a process plant, the method comprising:

- receiving (102) a process value of the process plant,
- determining (104) a recursive mean of the process value,

**characterised by** the following steps:

- calculating (106) an arithmetic mean of the process value within a pre-determined window,
- determining (112) a standard deviation of the process value within the pre-determined window and based on the calculated arithmetic mean,
- determining (114) an upper limit and a lower limit of the process value based on the recursive mean of the process value and on the determined standard deviation,
- determining (116) whether the calculated arithmetic mean is between the determined upper limit and the determined lower limit, and
- if the calculated arithmetic mean is between the determined upper limit and the determined lower limit,
generating (120) a first index indicating that the calculated arithmetic mean is between the determined upper limit and the determined lower limit.

2. Method according to claim 1, wherein determining (112) the standard deviation of the process value within the pre-determined window and based on the calculated arithmetic mean further comprises:

- determining (108) a quadratic deviation of the process value from the calculated arithmetic mean within the pre-determined window,
- calculating (110) the variance of the process value as the recursive mean of the determined quadratic deviation of the process value,
- determining (112) the standard deviation of the process value as the square root of the calculated variance of the process value.

3. Method according to any one of the preceding claims, further comprising:

if the calculated arithmetic mean is not between the determined upper limit and the determined lower limit,

- generating (118) a second index, the second index indicating that the process value is not in a steady state.

4. Method according to any one of the preceding claims, wherein the size of the pre-determined window is 64 process values.

5. Method according to any one of the preceding claims, wherein the upper limit of the process value equals the determined recursive mean plus 0.5 of the determined standard deviation, and wherein the lower limit of the process value equals the determined recursive mean minus 0.5 of the determined standard deviation.

6. Method according to any one of the preceding claims, further comprising:

- if the calculated arithmetic mean is between the determined upper limit and the determined lower limit,

- determining whether the generated first index changes within the predetermined window.

7. Method according to claim 6, wherein determining whether the generated first index changes within the predetermined window further comprises:

- calculating (122) a temporary index, the temporary index indicating the absolute value of a derivative of the first index.

8. Method according to claim 7, further comprising:

- if the calculated arithmetic mean is between the determined upper limit and the determined lower limit,
- calculating (124) a third index based on the temporary index, the third index indicating whether the generated first index changes within the predetermined window.

9. Method according to claim 8, wherein the third index equals the integral of the temporary index within the predetermined window.

10. Method according to any one of claims 8 and 9, further comprising:

- if the first index indicates that the calculated arithmetic mean is between the determined upper limit and the determined lower limit and the third index indicates that the first index does not change within the predetermined window,

- generating (130) a second index, the second index indicating that the process value is in a steady state.

11. Method according to any one of claims 8 to 10, the method further comprising:

- if the first index indicates that the calculated arithmetic mean is not between the determined upper limit and the determined lower limit or the third index indicates that the first index changes within the predetermined window,

- generating (128) a second index, the second index indicating that the process value is not in a steady state.

12. Method according to any one of claims 1 to 11, the method further comprising:

detecting the steady state in an open-loop system where a set point information is not applicable.

13. Controller device for detecting a steady-state in a process plant, the controller device comprising:

- a processor,
- a memory,
- instructions stored within the memory, wherein the instructions, when executed on the processor, cause the controller to:

- receive (102) a process value of the process plant,
- determine (104) a recursive mean of the process value, **characterised in that** the instructions, when executed on the processor, cause the controller to
- calculate (106) an arithmetic mean of the process value within a pre-determined window,
- determine (112) a standard deviation of the process value within the pre-determined window and based on the calculated arithmetic mean,
- determine (114) an upper limit and a lower limit of the process value based on the determined recursive mean of the process value and the determined standard deviation,
- determine (116) whether the calculated arithmetic mean is between the determined upper limit and the determined lower limit,
- if the calculated arithmetic mean is between the determined upper limit and the determined lower limit, generate (120) a first index indicating that the calculated arithmetic mean is between the determined upper limit and the determined lower limit.

14. Computer program for detecting a steady-state in a process plant, the computer program, when being executed by a data processor, is adapted for controlling and/or for carrying out the method as set forth in any one of the claims 1 to 12.

**Patentansprüche**

1. Verfahren zum Erkennen eines stationären Zustands bei einer verfahrenstechnischen Anlage, das Folgendes umfasst:

- Empfangen (102) eines Prozesswerts der verfahrenstechnischen Anlage,
- Bestimmen (104) eines rekursiven Mittelwerts des Prozesswerts,

**gekennzeichnet durch** die folgenden Schritte:

- Berechnen (106) eines arithmetischen Mittelwerts des Prozesswerts innerhalb eines vorgegebenen Fensters,
- Bestimmen (112) einer Standardabweichung des Prozesswerts innerhalb des vorgegebenen Fensters und auf der Grundlage des berechneten arithmetischen Mittelwerts,
- Bestimmen (114) einer Obergrenze und einer Untergrenze für den Prozesswert auf der Grundlage des rekursiven Mittelwerts des Prozesswerts und der bestimmten Standardabweichung,
- Bestimmen (116), ob der berechnete arithmetische Mittelwert zwischen der bestimmten Obergrenze und der bestimmten Untergrenze liegt, und
- wenn der berechnete arithmetische Mittelwert zwischen der bestimmten Obergrenze und der bestimmten Untergrenze liegt, Generieren (120) eines ersten Index, der angibt, dass der berechnete arithmetische Mittelwert zwischen der bestimmten Obergrenze und der bestimmten Untergrenze liegt.

2. Verfahren nach Anspruch 1, wobei das Bestimmen (112) der Standardabweichung des Prozesswerts innerhalb des vorgegebenen Fensters und auf der Grundlage des berechneten arithmetischen Mittelwerts ferner Folgendes umfasst:

- Bestimmen (108) einer quadratischen Abweichung des Prozesswerts von dem berechneten arithmetischen Mittelwert innerhalb des vorgegebenen Fensters,
- Berechnen (110) der Varianz des Prozesswerts als rekursiven Mittelwert der bestimmten quadratischen Abweichung des Prozesswerts,
- Bestimmen (112) der Standardabweichung des Prozesswerts als Quadratwurzel der berechneten Varianz des Prozesswerts.

3. Verfahren nach einem der vorhergehenden Ansprüche, das ferner Folgendes umfasst:

wenn der berechnete arithmetische Mittelwert nicht zwischen der bestimmten Obergrenze und der bestimmten Untergrenze liegt,

    - Generieren (118) eines zweiten Index, der angibt, dass sich der Prozesswert nicht in einem stationären Zustand befindet.

4.    Verfahren nach einem der vorhergehenden Ansprüche, wobei die Größe des vorgegebenen Fenster 64 Prozesswerte beträgt.

5.    Verfahren nach einem der vorhergehenden Ansprüche,
wobei die Obergrenze des Prozesswerts dem bestimmten rekursiven Mittelwert plus 0,5-mal die bestimmte Standardabweichung entspricht und wobei die Untergrenze des Prozesswerts dem bestimmten rekursiven Mittelwert minus 0,5-mal die bestimmte Standardabweichung entspricht.

6.    Verfahren nach einem der vorhergehenden Ansprüche, das ferner Folgendes umfasst:

    - wenn der berechnete arithmetische Mittelwert zwischen der bestimmten Obergrenze und der bestimmten Untergrenze liegt,

    - Bestimmen, ob sich der generierte erste Index innerhalb des vorgegebenen Fensters ändert.

7.    Verfahren nach Anspruch 6, wobei das Bestimmen, ob sich der generierte erste Index innerhalb des vorgegebenen Fensters ändert, ferner Folgendes umfasst:

    - Berechnen (122) eines temporären Index, der den Absolutwert einer Ableitung des ersten Index angibt.

8.    Verfahren nach Anspruch 7, das ferner Folgendes umfasst:

    - wenn der berechnete arithmetische Mittelwert zwischen der bestimmten Obergrenze und der bestimmten Untergrenze liegt,

    - Berechnen (124) eines dritten Index auf der Grundlage des temporären Index, wobei der dritte Index angibt, ob sich der generierte erste Index innerhalb des vorgegebenen Fensters ändert.

9.    Verfahren nach Anspruch 8, wobei der dritte Index dem Integral des temporären Index innerhalb des vorgegebenen Fensters entspricht.

10.  Verfahren nach einem der Ansprüche 8 und 9, das ferner Folgendes umfasst:

    - wenn der erste Index angibt, dass der berechnete arithmetische Mittelwert zwischen der bestimmten Obergrenze und der bestimmten Untergrenze liegt, und der dritte Index angibt, dass sich der erste Index innerhalb des vorgegebenen Fensters nicht ändert,

    - Generieren (130) eines zweiten Index, der angibt, dass sich der Prozesswert in einem stationären Zustand befindet.

11.  Verfahren nach einem der Ansprüche 8 bis 10, das ferner Folgendes umfasst:

    - wenn der erste Index angibt, dass der berechnete arithmetische Mittelwert nicht zwischen der bestimmten Obergrenze und der bestimmten Untergrenze liegt, oder der dritte Index angibt, dass sich der erste Index innerhalb des vorgegebenen Fensters ändert,

    - Generieren (128) eines zweiten Index, der angibt, dass sich der Prozesswert nicht in einem stationären Zustand befindet.

12.  Verfahren nach einem der Ansprüche 1 bis 11, das ferner Folgendes umfasst:

    Erkennen des stationären Zustandes in einem Steuersystem, in dem eine Sollwertinformation nicht anwendbar ist.

13.  Steuervorrichtung zum Erkennen eines stationären Zustands bei einer verfahrenstechnischen Anlage, wobei die Steuervorrichtung Folgendes umfasst:

    - einen Prozessor,
    - einen Speicher,
    - in dem Speicher gespeicherte Anweisungen, wobei die Anweisungen, wenn sie von dem Prozessor ausgeführt werden, die Steuerung zu Folgendem veranlassen:

    - Empfangen (102) eines Prozesswerts der verfahrenstechnischen Anlage,
    - Bestimmen (104) eines rekursiven Mittelwerts des Prozesswerts,

    **dadurch gekennzeichnet, dass** die Anweisungen, wenn sie von dem Prozessor ausgeführt werden, die Steuerung zu Folgendem veranlassen:

    - Berechnen (106) eines arithmetischen Mittelwerts des Prozesswerts innerhalb eines vorgegebenen Fensters,

- Bestimmen (112) einer Standardabweichung des Prozesswerts innerhalb des vorgegebenen Fensters und auf der Grundlage des berechneten arithmetischen Mittelwerts,
- Bestimmen (114) einer Obergrenze und einer Untergrenze für den Prozesswert auf der Grundlage des bestimmten rekursiven Mittelwerts des Prozesswerts und der bestimmten Standardabweichung,
- Bestimmen (116), ob der berechnete arithmetische Mittelwert zwischen der bestimmten Obergrenze und der bestimmten Untergrenze liegt,
- wenn der berechnete arithmetische Mittelwert zwischen der bestimmten Obergrenze und der bestimmten Untergrenze liegt, Generieren (120) eines ersten Index, der angibt, dass der berechnete arithmetische Mittelwert zwischen der bestimmten Obergrenze und der bestimmten Untergrenze liegt.

14. Computerprogramm zum Erkennen eines stationären Zustands bei einer verfahrenstechnischen Anlage, wobei das Computerprogramm so ausgelegt ist, dass es, wenn es von einem Datenprozessor ausgeführt wird, das Verfahren nach einem der Ansprüche 1 bis 12 steuert und/oder ausführt.

**Revendications**

1. Procédé de détection d'un régime permanent dans une installation de traitement, le procédé consistant :

- à recevoir (102) une valeur de traitement de l'installation de traitement ;
- à déterminer (104) une moyenne récursive de la valeur de traitement,

**caractérisé par** les étapes suivantes :

- calculer (106) une moyenne arithmétique de la valeur de traitement au sein d'un créneau prédéterminé ;
- déterminer (112) un écart type de la valeur de traitement dans les limites du créneau prédéterminé et sur la base de la moyenne arithmétique calculée ;
- déterminer (114) une limite supérieure et une limite inférieure de la valeur de traitement sur la base de la moyenne récursive de la valeur de traitement et de l'écart type déterminé ;
- déterminer (116) si la moyenne arithmétique calculée se situe entre la limite supérieure déterminée et la limite inférieure déterminée, et
- si la moyenne arithmétique calculée se situe entre la limite supérieure déterminée et la limite inférieure déterminée,

- produire (120) un premier indice indiquant que la moyenne arithmétique calculée se situe entre la limite supérieure déterminée et la limite inférieure déterminée.

2. Procédé selon la revendication 1, dans lequel la détermination (112) de l'écart type de la valeur de traitement dans les limites du créneau prédéterminé et sur la base de la moyenne arithmétique calculée consiste par ailleurs :

- à déterminer (108) un écart quadratique de la valeur de traitement par rapport à la moyenne arithmétique calculée dans les limites du créneau prédéterminé ;
- à calculer (110) la variance de la valeur de traitement comme la moyenne récursive de l'écart quadratique déterminé de la valeur de traitement ;
- à déterminer (112) l'écart type de la valeur de traitement comme la racine carrée de la variance calculée de la valeur de traitement.

3. Procédé selon l'une quelconque des revendications précédentes, consistant par ailleurs :

si la moyenne arithmétique calculée ne se situe pas entre la limite supérieure déterminée et la limite inférieure déterminée,

- à produire (118) un deuxième indice, le deuxième indice indiquant que la valeur de traitement n'est pas dans un régime permanent.

4. Procédé selon l'une quelconque des revendications précédentes, dans lequel la taille du créneau prédéterminé est de 64 valeurs de traitement.

5. Procédé selon l'une quelconque des revendications précédentes, dans lequel la limite supérieure de la valeur de traitement est égale à la moyenne récursive déterminée plus 0,5 de l'écart type déterminé, et dans lequel la limite inférieure de la valeur de traitement est égale à la moyenne récursive déterminée moins 0,5 de l'écart type déterminé.

6. Procédé selon l'une quelconque des revendications précédentes, consistant par ailleurs :

- si la moyenne arithmétique calculée se situe entre la limite supérieure déterminée et la limite inférieure déterminée,

- à déterminer si le premier indice produit change dans les limites du créneau prédéterminé.

**7.** Procédé selon la revendication 6, dans lequel déterminer si le premier indice produit change dans les limites du créneau prédéterminé, consiste par ailleurs :

- à calculer (122) un indice temporaire, l'indice temporaire indiquant la valeur absolue d'une dérivée du premier indice.

**8.** Procédé selon la revendication 7, consistant par ailleurs :

- si la moyenne arithmétique calculée se situe entre la limite supérieure déterminée et la limite inférieure déterminée,

- à calculer (124) un troisième indice basé sur l'indice temporaire, le troisième indice indiquant si le premier indice produit change dans les limites du créneau prédéterminé.

**9.** Procédé selon la revendication 8, dans lequel le troisième indice est égal à l'intégrale de l'indice temporaire dans les limites du créneau prédéterminé.

**10.** Procédé selon l'une quelconque des revendications 8 et 9, consistant par ailleurs :

- si le premier indice indique que la moyenne arithmétique calculée se situe entre la limite supérieure déterminée et la limite inférieure déterminée et que le troisième indice indique que le premier indice ne change pas dans les limites du créneau prédéterminé,

- à produire (130) un deuxième indice, le deuxième indice indiquant que la valeur de traitement est dans un régime permanent.

**11.** Procédé selon l'une quelconque des revendications 8 à 10, le procédé consistant par ailleurs :

- si le premier indice indique que la moyenne arithmétique calculée ne se situe pas entre la limite supérieure déterminée et la limite inférieure déterminée ou que le troisième indice indique que le premier indice change dans les limites du créneau prédéterminé,

- à produire (128) un deuxième indice, le deuxième indice indiquant que la valeur de traitement n'est pas dans un régime permanent.

**12.** Procédé selon l'une quelconque des revendications 1 à 11, le procédé consistant par ailleurs :

à détecter le régime permanent dans un système en boucle ouverte où une information formant point de consigne ne s'applique pas.

**13.** Dispositif régulateur servant à détecter un régime permanent dans une installation de traitement, le dispositif régulateur comprenant :

- un processeur ;
- une mémoire ;
- des instructions stockées dans la mémoire, étant entendu que les instructions, quand elles sont exécutées sur le processeur, amènent le régulateur :

- à recevoir (102) une valeur de traitement de l'installation de traitement ;
- à déterminer (104) une moyenne récursive de la valeur de traitement,

**caractérisé en ce que** les instructions, quand elles sont exécutées sur le processeur, amènent le régulateur :

- à calculer (106) une moyenne arithmétique de la valeur de traitement dans les limites d'un créneau prédéterminé ;
- à déterminer (112) un écart type de la valeur de traitement dans les limites du créneau prédéterminé et sur la base de la moyenne arithmétique calculée ;
- à déterminer (114) une limite supérieure et une limite inférieure de la valeur de traitement sur la base de la moyenne récursive déterminée de la valeur de traitement et de l'écart type déterminé ;
- à déterminer (116) si la moyenne arithmétique calculée se situe entre la limite supérieure déterminée et la limite inférieure déterminée ;
- si la moyenne arithmétique calculée se situe entre la limite supérieure déterminée et la limite inférieure déterminée,
- à produire (120) un premier indice indiquant que la moyenne arithmétique calculée se situe entre la limite supérieure déterminée et la limite inférieure déterminée.

**14.** Programme informatique servant à détecter un régime permanent dans une installation de traitement, le programme informatique, quand il est exécuté par un dispositif de traitement de données, étant adapté en vue de réguler et/ou d'exécuter le procédé tel qu'exposé dans l'une quelconque des revendications 1 à 12.

FIG 1

Process Value, Y — 102

Estimate recursive mean of Y, Y_MU — 104

Estimate upper and lower limits
Y_UL = Y_MU + 0.5 * Y_STD
Y_LL = Y_MU - 0.5 * Y_STD — 114

Estimate window average, Y_WIN — 106

VY = Sqr(Y - Y_WIN) — 108

Var_Y = recursive mean of VY — 110

Y_STD = sqrt(Var_Y) — 112

Y_UL < Y_WIN < Y_LL — 116

No → BSS = 0 — 118

Yes → Generate Index — 120

TempIndex = abs(Derivative of Index) — 122

SumIndex = Window Integral of TempIndex — 124

If SumIndex == 0 and Index == 1 — 126

No → BSS = 0 — 128

Yes → BSS = 1 — 130

100

# FIG 2

200

EP 2 988 186 B1

## FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHROWTI et al.** Type II critical values for a steady state identifier. *Journal of Process Control,* 01 August 2010, vol. 20, 885-890